# EUROPEAN PATENT APPLICATION

(11) **EP 4 539 426 A1**
(43) Date of publication of application: **16.04.2025**
(21) Application number: 24205674.5
(22) Date of filing: 09.10.2024
(51) Int. Cl.: H04L 47/28, H04L 47/34

(54) **FAIR ORDER PROCESSING**

(30) Priority: 10.10.2023 US 202318378186
(71) Applicant: Google LLC, Mountain View, CA 94043 (US)
(72) Inventor: LEFEBVRE, Benoit, Mountain View, 94043 (US); KING, Steven Richard, Mountain View, 94043 (US); NANDIMANDALAM VENKATA, Karthik, Mountain View, 94043 (US); GOKHALE, Saahil Shriniwas, Mountain View, 94043 (US); NAIR, Rajeev, Mountain View, 94043 (US)
(74) Representative: Betten & Resch

(57) **Abstract**

The technology is generally directed to reordering packets received by a network to reduce the unfairness in transmitting and receiving data. The packets may be reordered based on a timestamp appended to the packet. The timestamp may correspond to a time when the sender loses control of the packet and the receiving network gains control. A packet reorder structure may receive the packets with the appended timestamps during a sample interval. The packet reorder structure may compare the timestamp to a time interval for a plurality of timeslots. The packets may be reordered based on the timeslot the packet is allocated to. In some examples, the duration of the timeslot may be dynamically adjusted such that the number of out of order packets received during the sample interval corresponds to a threshold.

## Description

### BACKGROUND

Fairness in transmitting and receiving data is based on the premise that end users receive the same information at the same time and that it takes the same amount of time to send information to all end users. To ensure fairness, networks typically modify the length of physical cables within the network through which the data is transmitted to increase or decrease latency along a certain network path. Increasing or decreasing the length of a cable is difficult in terms of precision and costly, in both labor and materials. In other attempts to ensure fairness, the network loads may be distributed amongst network switches. This is neither accurate nor feasible in large-scale networks.

### BRIEF SUMMARY

The technology is generally directed to reordering packets received by a network to reduce the unfairness in transmitting and receiving data. The packets may be reordered based on a timestamp appended to the packet. The timestamp may correspond to a time when the sender loses control of the packet and the receiving network gains control. In some examples, the timestamp may correspond to when the packet was received at an ingress port of a network switch of the receiving network. A packet reorder structure may receive the packets with the appended timestamps during a sample interval. The packet reorder structure may compare the timestamp to a time interval for a plurality of timeslots. The packets may be reordered based on the timeslot the packet is allocated to. In some examples, the duration of the timeslot may be dynamically adjusted such that the number of out-of-order packets received during the sample interval corresponds to a threshold.

One aspect of the technology is directed to a method, comprising receiving, by one or more processors at a packet reorder data structure, one or more packets, wherein each of the one or more packets includes a timestamp corresponding to a time the respective packet was received at an ingress port of a network, allocating, by the one or more processors based on the timestamp, the one or more packets to respective timeslots in the packet reorder data structure, and reordering, by the one or more processors based on the timestamp, the one or more packets in a current timeslot.

The method may further comprise dynamically adjusting, by the one or more processors, a duration of the timeslots. The dynamic adjustment may occur based on at least one of a fixed time interval, a volume of packet traffic, a sample interval, or a maximum network delay. When dynamically adjusting the duration of the timeslots, the method may further comprise determining, by the one or more processors, a number of packets received out of order and comparing, by the one or more processors, the number of packets received out of order to a threshold number of packets. When the number of packets received out of order exceeds the threshold number of packets, the method may further comprise dynamically increasing the duration of the timeslots, resulting in fewer out-of-order packets. When the number of packets received out of order is below the threshold number of packets, the method may further comprise dynamically decreasing the duration of the timeslots, resulting in more out-of-order packets.

When allocating the one or more packets, the method may further comprise comparing, by the one or more processors, a timestamp of a packet of the one or more packets to a time interval of the current timeslot, and allocating, by the one or more processors based on the comparison, the packet to a respective timeslot, wherein the respective timeslot includes a time corresponding to the timestamp of the packet.

The method may further comprise appending, by the one or more processors, a respective timestamp to the one or more packets. When appending the respective timestamps to the one or more packets, the method may further comprise encapsulating, by the one or more processors, the respective packets, or tacking, by the one or more processors, the respective timestamp to an end of the respective packet such that the bytes in the packet are not rearranged. Appending the respective timestamp to the one or more packets may occur at a switch in the network.

When receiving the one or more packets, the method may further comprise identifying, by the one or more processors, the timestamp for the respective packet of the one or more packets.

The timestamp may correspond to a time a client network transmitting the one or more packets loses control of the one or more packets to a receiving network.

Another aspect of the disclosure is directed to a system comprising one or more processors. The one or more processors may be configured to receive, at a packet reorder data structure, one or more packets, wherein each of the one or more packets includes a timestamp corresponding to a time the respective packet was received at an ingress port of a network, allocate, based on the timestamp, the one or more packets to respective timeslots in the packet reorder data structure, and reorder, based on the timestamp, the one or more packets in a current timeslot.

Yet another aspect of the disclosure is directed to one or more non-transitory computer-readable medium storing instructions, which when executed by one or more processors, cause the one or more processors to receive, at a packet reorder data structure, one or more packets, wherein each of the one or more packets includes a timestamp corresponding to a time the respective packet was received at an ingress port of a network, allocate, based on the timestamp, the one or more packets to respective timeslots in the packet reorder data structure, and reorder, based on the timestamp, the one or more packets in a current timeslot.

### BRIEF DESCRIPTION OF THE DRAWINGS

Figure 1 is a block diagram of an example network according to aspects of the disclosure.
Figure 2 is a diagram of an example packet reorder data structure according to aspects of the disclosure.
Figure 3 is a diagram of an example packet reorder data structure receiving an out-of-order packet according to aspects of the disclosure.
Figure 4 is an example diagram comparing the number of actual out-of-order packets to a threshold according to aspects of the disclosure.
Figure 5 is an example diagram illustrating how a timeslot of a packet reorder data structure is dynamically adjusted according to aspects of the disclosure.
Figure 6 is a block diagram of an example system in accordance with aspects of the disclosure.
Figure 7 is an example method for reordering packets in accordance with aspects of the disclosure.

### DETAILED DESCRIPTION

The technology is generally directed to reordering packets received by a network to reduce the unfairness in transmitting and receiving data. Unfairness may be caused by packets being delayed within a network. For example, a first packet, e.g., Packet 1, may be transmitted to a receiving network before a second packet, e.g., Packet 2. Paket 1 may experience a delay within the network such that Packet 2, which was transmitted after Packet 1, is received before Packet 1. Packet 2 would, therefore, have a timestamp lower than Packet 1, even though Packet 2 was sent after Packet 1. The delay within the network created unfairness as Packet 1, which was transmitted to the receiving network before Packet 2, will now be processed after Packet 2 due to its later timestamp. To reduce the unfairness, timestamps corresponding to when the sender loses control and/or when the receiving network gains control of the packet may be used. The timestamp when the sender loses control and/or when the receiving network gains control accounts for possible delays within the receiving network and ensures fairness when processing the packets. Accordingly, using timestamps corresponding to when the sender loses control and/or when the receiving network gains control of the packet would ensure that Packet 1 would be ordered before Packet 2, thereby ensuring fairness when processing Packets 1 and 2.

The packets may be reordered based on the timestamp corresponding to when the sender loses control and/or when the receiving network gains control of the packet. The sender may lose control of the packet when the packet is sent out through an operation that cannot be rescinded or canceled. The receiving network may gain control of the packet after the sender can no longer rescind or cancel the transmission of the packet. In some examples, the receiving network may gain control of the packet when a device receives the packet transmitted by the sender. In another example, the sender may lose control and/or the receiving network may gain control of the packet at a receiving network endpoint.

According to some examples, the packet may be received at a receiving network endpoint. The receiving network endpoint may be, for example, an ingress port of a network switch. A timestamp may be tacked onto or appended to the packet at the time the packet was received at the receiving network endpoint, rather than the time the packet was received by a receiver within the network. The time the packet was received at the receiving network endpoint, such as the ingress port of the network switch may, in some examples, correspond to the time a sender of the packet loses control of the packet in the network. For example, the packets may originate at client terminals in a client network and be transmitted to a receiving network. The timestamp may correspond to the time the client network loses control of the packet to the receiving network. The timestamp may be appended to the packet and used to reorder the packets before the packets are processed.

The network switch may implement a packet reorder data structure. The packets may be processed during a sample interval. The packet reorder data structure may be, in some examples, a reorder buffer. The sample interval may correspond to a period of time in which the switch, implementing the packet reorder data structure, monitors incoming packets for the purposes of adjusting the duration of a timeslot of the packet reorder data structure. Each timeslot may correspond to a time interval. The time interval may correspond to the amount of delay the network will wait before processing the reordered packets. The timeslots may be, in some examples, a sliding window such that packets in a head timeslot are slid out of the window to be delivered in order based on their timestamps.

According to some examples, the packet reorder data structure may compare the timestamps of the packets to a time interval for a plurality of timeslots. The packets may be allocated to a given timeslot based on the timestamp. The packets within the timeslot may be reordered based on their timestamp.

In some examples, the duration of the timeslot may be dynamically adjusted. For example, the duration of the timeslot may be adjusted based on the allocation of packets to the timeslots. In such an example, the duration of the timeslot may be adjusted such that the number of out-of-order ("OOO") packets received during the sample interval corresponds to a threshold. The threshold may be a predetermined number, predetermined ratio of OOO packets versus packets that are not OOO, predetermined quota, etc. of packets to be delivered OOO. According to some examples, at least some of the packets may be intentionally delivered out of order. The number of packets to be intentionally delivered OOO may correspond to the threshold. Having a threshold number of packets delivered OOO may minimize the latency of the network as compared to waiting for all packets to be delivered in order. For example, if a network were to wait for all packets to be received and ordered before processing the packets, the latency of the network would increase and, therefore, slow the turnaround time for the transactions associated with the packets. In comparison, by having a threshold number of packets to be delivered OOO, the latency of the network decreases and the turnaround time for the transaction decreases.

Typically, packets are reordered based on a timestamp corresponding to when the packet is received by the receiver. Using a timestamp based on when the packet was received at the receiver does not take into account the effects of jitter, distance, or delay, within the network. For example, this may result in a packet, e.g., packet "A", which was sent earlier than another packet, *e.g.,* packet "B", to be timestamped with a timestamp later than the timestamp of the other packet, packet B. This can result in unfairness in the processing of the packets, e.g., processing packet B before packet A even though packet A was sent before packet B.

Using timestamps based on the time the packet is received at the ingress port, as compared to the time when the packets are received at the receiver, reduces the unfairness in reordering the packets. In particular, the unfairness may be reduced by reducing the effects of jitter, distance, or delays, within the receiving network. For example, after being timestamped, the packet may be hung-up or delayed within the receiving network before being received by the packet reorder data structure. In another example, the packet may need to travel a long distance before being received at a receiving network endpoint. The receiving network endpoint may be, in some examples, a network switch. The network switch may implement the packet reorder data structure. To account for delays in the network, and to ensure fairness when processing the packets, the timestamp of when the packet was received by the network switch may be used to allocate and reorder packets rather than the time the packet reorder data structure or the receiver of the network switch received the packet. The time the packet was received by the network switch may correspond to when the sender loses control of the packet and/or when the receiving network gains control of the packet. In contrast, the packet may experience delays within the receiving network such that the packet may be delayed in reaching the packet reorder data structure and/or receiver. Using a timestamp of when the packet reaches the packet reorder data structure and/or receiver, may, therefore, result in unfairness due to the delays.

According to some examples, using the timestamp of when the packet was received by the receiving network endpoint, such as the network switch, any delays or jitter within the receiving network is negated. For example, if packet A is received by the network switch before packet B, but subsequently experiences delays within the network such that packet B is received by the receiver before packet A, packet A would still be reordered before packet B as packet A has an earlier timestamp. Accordingly, using the timestamp when the network switch receives the packet, or when the sender loses control of the packet to the receiving network, may reduce processing unfairness.

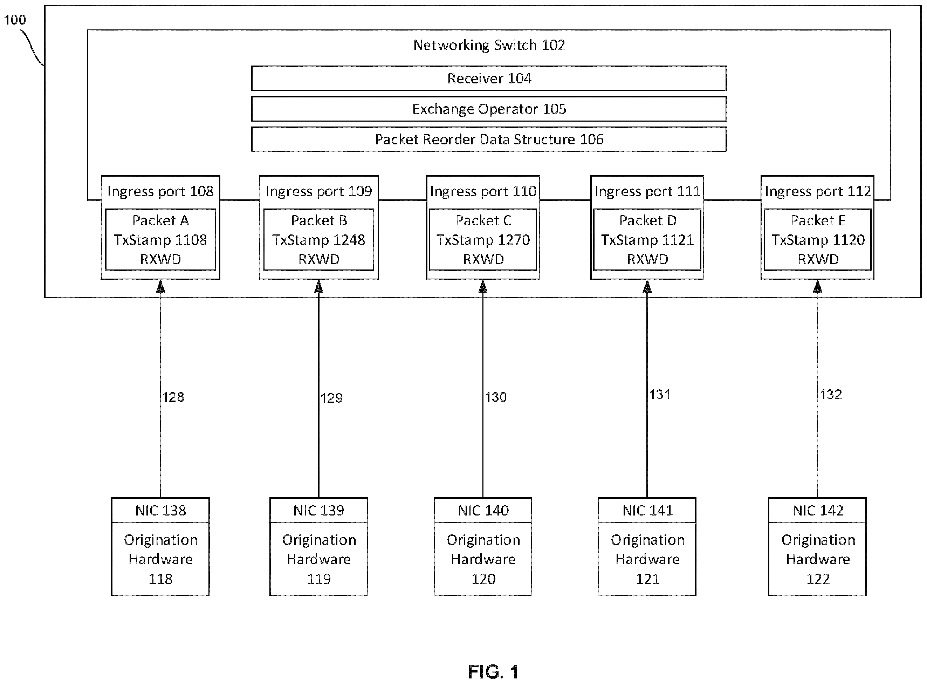

Figure 1 illustrates an example configuration of a network between a receiving network endpoint and origination hardware. The network 100 may be, for example, a fiber optic network, copper or ethernet network, etc. The receiving network endpoint may be, for example, a networking switch, such as networking switching 102. The networking switch 102 may be, for example, a top-of-rack ("TOR") switch and the origination hardware 118-122 may be user or customer hardware. The networking switch 102 may include a receiver 104, packet reorder data structure 106, and input ports 108-112. The network 100 may be configured to receive packets from origination hardware 118-122.

Packets A-E, or data, may be transmitted from a plurality of origin locations, e.g. client networks. The client networks may include, for example, origination hardware 118-122. The packets A-E may be transmitted via cables 128-132, respectively. A timestamp, e.g., "TxStamp," may be appended to each packet A-E when the transmitting network loses control of the packet to the receiving network, e.g., network 100. In some examples, the transmitting network may lose control of the packet when the packet is received at the ingress ports 108-112 of networking switch 102. In such an example, the timestamp may be appended to the packet at the ingress ports 108-112 of the networking switch 102. The ingress ports may be, for example, the ingress port of each top of rack ("TOR") switch. In another example, the timestamp may be applied at the network interface chip ("NIC") 138-142, in the path of the packet after the NIC but before the networking switch 102, *e.g.,* at a point along cables 128-132, or the like. According to some examples, the timestamp may be applied by another device, such as a device connecting the originating hardware or NIC to the network receiving the packet, a device connecting the network transmitting the packet A-E to the network receiving the packet, or the like.

The timestamp may be appended to the packet A-E such that the bytes in the packet are undisturbed by the addition of the timestamp. In some examples, the packet may be encapsulated such that the timestamp may be located in one of many different locations within the packet. In such an example, the receiver receiving the packet may have an agreement with the network switch as to where to find the timestamp within the packet, how to retrieve the timestamp from the encapsulation, or the like. The timestamp may represent when the device or network transmitting the packet lost control of the packet. The device transmitting the packet may lose control when the receiving network takes control of the packet. The device transmitting the packet A-E may be, for example, origination hardware 118-122. In some examples, the device transmitting the packet may lose control at the networking switch 102, at a network gateway, at the TOR, at the NIC 138-142, or the like.

According to some examples, an exchange operator 105 may be configured to adjust the timestamps of the packets based on the characteristics of the hardware used to transmit the packets, such as originating hardware 118-122. For example, the networking switches 102 receiving the packets and/or appending the timestamps may be synced to each other and have a small margin of error between their clocks. The unfairness between the timestamps may be based on a margin between the slowest clock and the fastest clock. The timestamps may, therefore, be synced within a margin of error that may not affect the fairness of the ordering of the packets.

The packets A-E received at the ingress ports 108-112 of the networking switch 102 may be transmitted to the packet reorder data structure 106. The packet reorder data structure 106 may be configured to reorder the packets A-E received at the input ports 108-112. For example, the packet reorder data structure 106 may reorder packets based on the timestamps appended to packets A-E.

When reordering packets based on the timestamp, the sender loses control of the packet, as compared to when the packets are received at the receiver 104 of the networking switch 102 of the receiving network, which reduces the unfairness in the reordering of the packets. As an example, a first packet, e.g., Packet 1, may have been transmitted to the networking switch 102 before a second packet, e.g., Packet 2, was transmitted to the same network switch. Packet 1 may experience a delay within the network such that Packet 2, which was transmitted after Packet 1, is received by receiver 104 before Packet 1. Packet 2 would, therefore, have a timestamp lower than Packet 1, even though Packet 2 was sent after Packet 1. The delay within the network created unfairness as Packet 1, which was transmitted to the networking switch 102 before Packet 2, will now be processed after Packet 2 due to its later timestamp. Using timestamps corresponding to when the sender loses control and/or when the receiving network gains control of the packet accounts for possible delays within the receiving network and ensures fairness when processing the packets. Accordingly, using timestamps corresponding to when the sender loses control and/or when the receiving network gains control of the packet would ensure that Packet 1 would be ordered before Packet 2, thereby ensuring fairness when processing Packets 1 and 2.

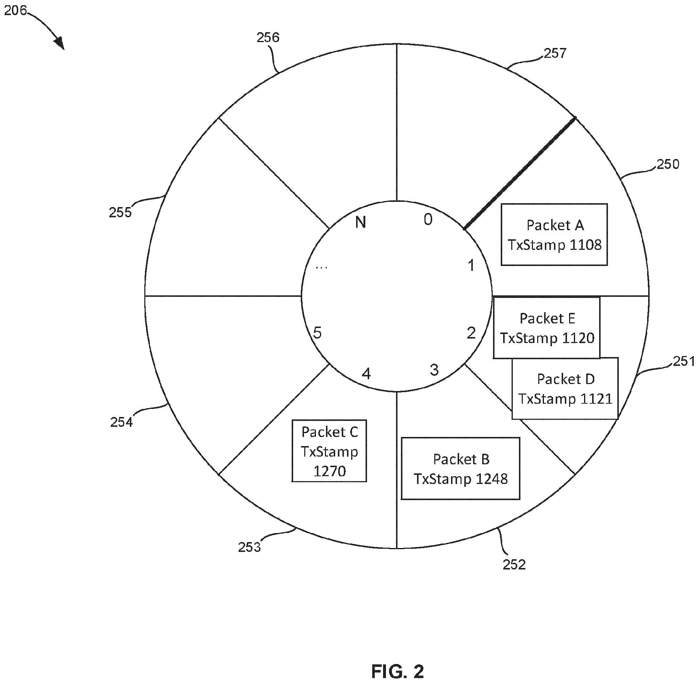

Figure 2 illustrates an example packet reorder data structure. In some examples, the packet reorder data structure 206 may be a circular array having a plurality of timeslots 250-257. While the packet reorder data structure 206 is illustrated as a circular array, the packet reorder data structure may include a plurality of timeslots in any configuration, such as rectangular, square, triangular, hexagonal, etc. The circular array, as shown, is just one example and is not intended to be limiting. In some examples, other data structures can be used to implement the packet reorder data structure 206, such as a linked list or a non-circular buffer or data structure.

The timeslots 250-257 may have an interval measured in time, units, packets, or the like. In some examples, the interval of the timeslot may correspond to the resolution of the time stamp. For example, if the timestamp resolution is 5 ns, the interval of the timeslots may be 5 ns.

The packet reorder data structure 206 may receive packets A-E during a sample interval. The sample interval may correspond to a period of time in which the packet reorder data structure 206 monitors incoming packets for the purposes of adjusting a duration of the timeslots. The duration of the timeslots, e.g., the time interval of each timeslot, may be dynamically adjusted such that a threshold number of packets are processed OOO.

Packets received by the packet reorder data structure 206 may be sorted into a given timeslot 250-257 based on the timestamp of the packet relative to the head timeslot 250 and time interval of the timeslots 250-257. The head timeslot 250 may be, for example, an initial timeslot in which the received packet with the lowest timestamp is allocated. The head timeslot 250 may be used as a relative measure for incoming packets received by the packet reorder data structure 206. Once allocated to a given timeslot 250-257, the packets within each timeslot 250-257 may be reordered before being transmitted for processing.

According to some examples, the packet reorder data structure 206 may compare the timestamp of each packet A-E to the time interval of timeslots 250-257. Based on the comparison of the timestamp and the plurality of timeslots, a given packet may be allocated to a respective timeslot. As an example, if the current timeslot in the reordering window is 10 units and a packet arrives with a timestamp of 15 units, the packet may be allocated to the timeslot corresponding to the current timeslot plus 5 units. In another example, if the current timeslot value is 10 units and a packet arrives with a timestamp of 9 units, the packet may be delivered immediately as the packet is an out-of-order packet with a timestamp smaller than the current timeslot.

As illustrated in Figure 2, during a sample interval, packet reorder data structure 206 may allocate packets A-E into a timeslot 250-257 based on their respective timestamp. For example, packet A may be allocated to head timeslot 250 as the timestamp 1108 of packet A is the lowest timestamp among packets A-E. Packets D and E may be allocated to timeslot 251 based on their timestamps 1121 and 1120, respectively. Within timeslot 251, packet E may be ordered before packet D as timestamp 1120 of packet E is lower than timestamp 1121 of packet D. Packet B may be allocated to timeslot 252 and packet C may be allocated to timeslot 253.

Packets within the head timeslot 250, *e.g.,* packet A, may be transmitted for processing after the time interval of the timeslot has concluded. After the packets in the head timeslot 250 are transmitted for processing, timeslot 251 may become the head timeslot as timeslot 251 would now have the packet with the lowest timestamp.

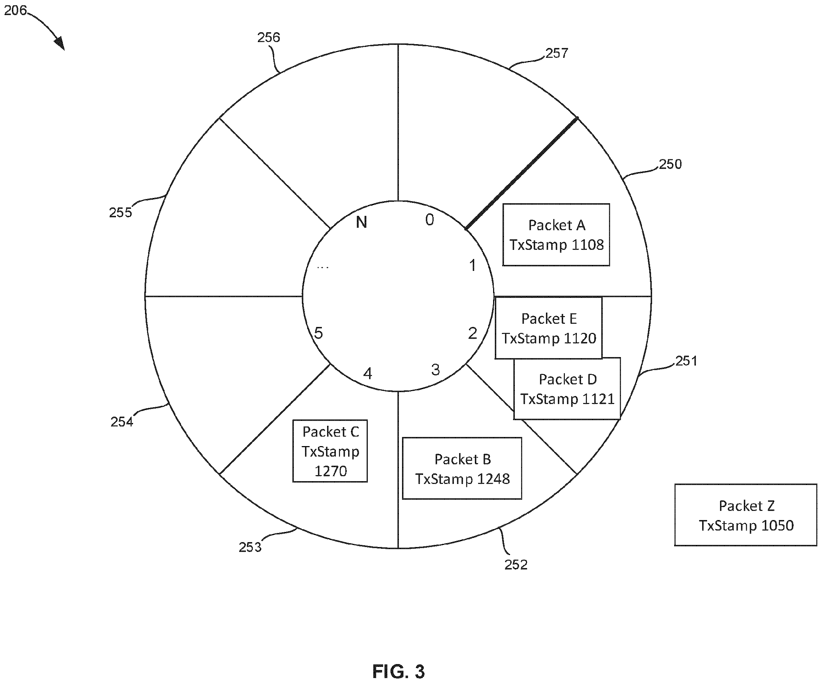

Figure 3 illustrates the packet reorder data structure of Figure 2. In addition to the packets A-E received by the packet reorder data structure 206, Figure 3 includes packet Z. Packet Z has a timestamp of 1050, which is after the lowest timestamp of the head timeslot 250. Head timeslot 250, as shown, includes packet A with a timestamp of 1108. The time interval of head timeslot 250 is, therefore, after timestamp 1050. In such an example, packet Z would not be allocated to a timeslot 250-57. Rather, packet reorder data structure 206 may deliver packet Z delivered OOO upon receipt.

According to some examples, during the sample interval, a receive window delta ("RXWD") associated with each timestamp may be stored. The RXWD may include the amount of local time the packet waited in the reorder timeslot. When the sample interval ends, the list of packets may be sorted based on the respective RXWDs for the packets in the timeslot. For example, packets that are received out of order may have a negative RXWD. The negative value may correspond to how badly the packet missed the timeslot. A positive RXWD may indicate that the packet was received within the current timeslot or a future timeslot. According to some examples, the list may be sorted with the largest RXWD first and the smallest, or most negative, RXWD last. The sorted list may be the reordered packets.

Referring to Figure 3 as an example, packet B has a RXWD of +40 whereas packet Z has a RXWD of -60. In such an example, packet B may have been waiting for 40 units, or seconds, within timeslot 252. In contrast, as packet Z arrived late, packet Z missed its timeslot and, therefore, did not have to wait within a timeslot before being processed. The RXWD of packets that arrive late, thereby missing their timeslot, may be negative. The greater the negative number may correspond to how much the packet missed their timeslot by.

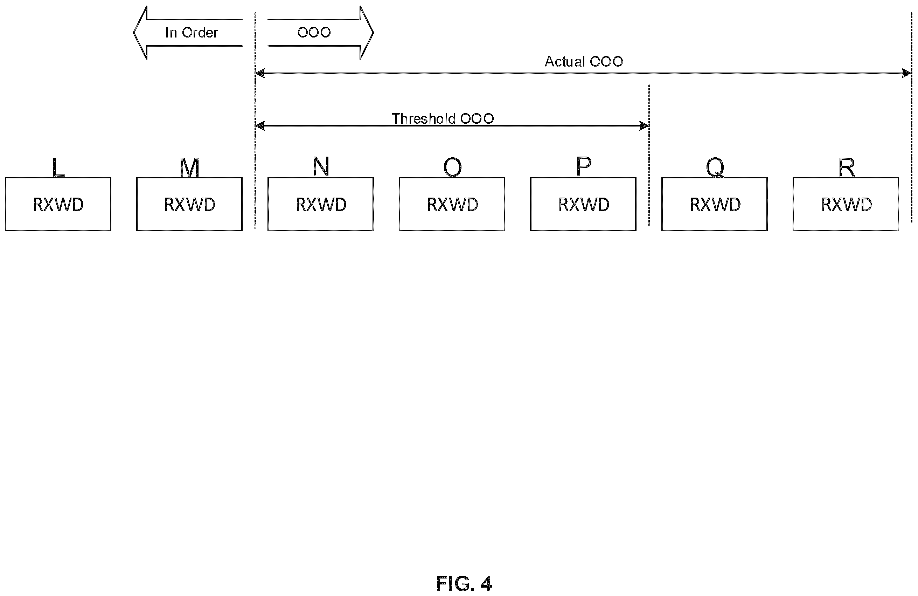

Figure 4 illustrates how the RXWDs may be used to dynamically adjust the interval of the timeslots. After the sample interval concludes, the list of packets L-R received by the packet reorder data structure 106 during that sample interval may be ordered. The packets L-R may be ordered such that the packet with the largest positive RXWD is at one end of the list while the packet with the largest negative RXWD is at the other end of the list. Packets L, M with a positive RXWD may correspond to packets that were delivered in order. Packets N-R with a negative RXWD may correspond to packets that were delivered OOO.

According to some examples, the number of packets with a negative RXWD may be determined. The number of negative packets with a negative RXWD may correspond to the number of packets OOO. In some examples, if the number of OOO packets differs from a threshold number of OOO packets, the timeslots may be adjusted. The threshold number of OOO packets may correspond to a goal, ideal, preferred, predetermined, etc., amount of OOO packets.

In examples where the actual OOO packets different from the threshold OOO packets, the timeslots of the packet reorder data structure 106 may be increased or decreased to reduce or increase the number of OOO packets.

As an example, if the actual number of OOO packets is 5 and the threshold number of OOO packets is 3, the RXWD of packets that were delivered OOO above the threshold may be used to adjust the timeslot. According to some examples, the RXWD may be negated and used to adjust the timeslot. If the negated value results in a positive return, the timeslot may be increased. If the negated value results in a negative return, the timeslot may be decreased.

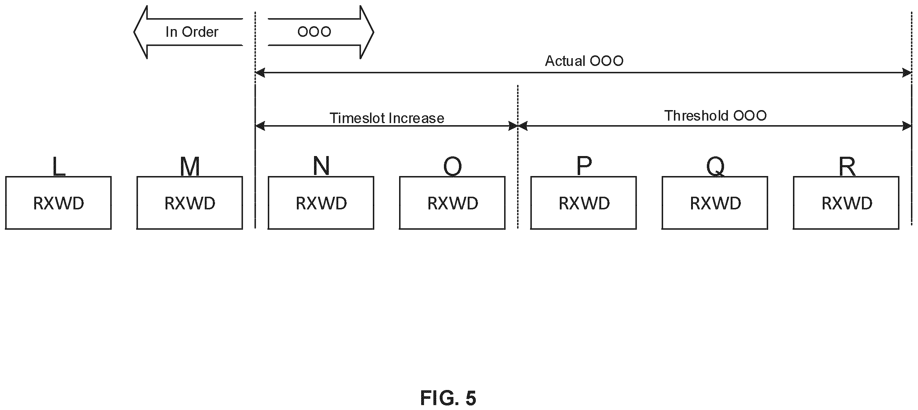

Referring to Figure 5, the timeslots of the packet reorder data structure 106 may be dynamically adjusted such that the timeslot is increased to include packets N, O. The increase of the time interval of the timeslot may correspond to the negated value, or absolute value, of the last packet to be included in the in-order packets. For example, as there are five actual OOO packets, e.g., packets N-R, but the threshold number of OOO packets is three, the time interval should be expanded such that two of the five actual OOO packets should be included in the in-order packets.

As illustrated in Figure 5, the two packets to be included in the in-order packets are packets N, O. As packet O is ordered after packet N, the RXWD of packet O may be used to determine the amount that the time interval of the timeslots should be increased. The negative RXWD value of packet O may be negated such that the negative RXWD becomes positive. In some examples, the absolute value of the negative RXWD value may be determined. The negated RXWD and/or absolute value of the RXWD may be the amount of time the time interval of the timeslots should be increased. By increasing the time interval of the timeslots, the number of OOO packets may be decreased. In the example shown, the time interval of the timeslots may be increased such that the number of actual OOO packets corresponds to the threshold number of OOO packets.

The timeslots may be dynamically adjusted to minimize ordering latency while meeting accuracy requirements of the network. In some examples, the dynamic adjustments may occur automatically after the sample interval. The timeslots may be dynamically adjusted based on a fixed time interval, the volume of traffic, based on the sample interval, a maximum network delay, or the like. The fixed time interval may be once per second, once every three seconds, etc. The volume of traffic may be once per million packets, once per 1,000 packets, etc. The sample interval may be, for example, the period of time in which the packet reorder data structure monitors incoming packets for the purposes of adjusting a duration of a timeslot of the packet reorder data structure. The timeslots may, in some examples, be adjusted after each sample window. In some examples, the sample window may correspond to the timeslot interval such that the timeslots may be adjusted after the previous timeslot interval finishes. Adjusting the timeslots based on the maximum network delay may include adjusting the timeslots to allow for a threshold number of packets to be received out of order.

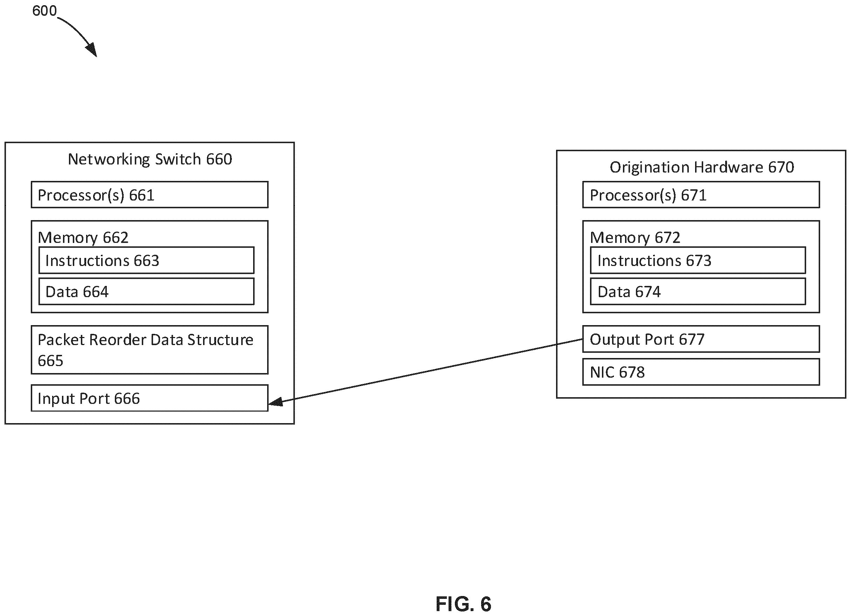

Figure 6 illustrates an example system in which the features described above and herein may be implemented. While a number of components are shown, such components are merely non-limiting examples and other components may additionally or alternatively be included. The figures should not be considered as limiting the scope of the disclosure or usefulness of the features described herein. In this example, system 600 may include a receiving network endpoint, such as a networking switch 660, and one or more origination hardware 670.

The networking switch 660 may include one or more processors 661, memory 662, instructions 663, data 664, packet reorder data structure 665, and input port 666. The networking switch 660 may be, for example, a TOR, a leaf of a multicast tree, an S2 switch, or the like.

The processors 661 may be any conventional processors, such as commercially available microprocessors. Alternatively, the one or more processors may be an application specific integrated circuit (ASIC) or other hardware-based processor. Although Figure 6 functionally illustrates the processor, memory, and other elements of networking switch 660 as being within the same block, it will be understood by those of ordinary skill in the art that the processor, computing device, or memory may actually include multiple processors, computing devices, or memories that may or may not be stored within the same physical housing. Similarly, the memory may be a hard drive or other storage media located in a housing different from that of networking switch 660. Accordingly, references to a processor or computing device will be understood to include references to a collection of processors or computing devices or memories that may or may not operate in parallel.

Memory 662 may store information that is accessible by the processors, including instructions 663 that may be executed by the processors 661. The memory 662 may be a type of memory operative to store information accessible by the processors 661, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. The subject matter disclosed herein may include different combinations of the foregoing, whereby different portions of the instructions 663 and data 664 are stored on different types of media.

Memory 662 may be retrieved, stored, or modified by processors 661 in accordance with the instructions 663. For instance, although the present disclosure is not limited by a particular data structure, the data 664 may be stored in computer registers, in a relational database as a table having a plurality of different fields and records, XML documents, or flat files. The data 664 may also be formatted in a computer-readable format such as, but not limited to, binary values, ASCII or Unicode. By further way of example only, the data 664 may be stored as bitmaps comprised of pixels that are stored in compressed or uncompressed, or various image formats (e.g., JPEG), vector-based formats (e.g., SVG) or computer instructions for drawing graphics. Moreover, the data 664 may comprise information sufficient to identify the relevant information, such as numbers, descriptive text, proprietary codes, pointers, references to data stored in other memories (including other network locations) or information that is used by a function to calculate the relevant data.

The instructions 663 can be any set of instructions to be executed directly, such as machine code, or indirectly, such as scripts, by the processor 661. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

Packet reorder data structure 665 may be configured to receive packets transmitted from origination hardware 670. The packets may be appended with a timestamp when the network associated with the origination hardware 670 loses control of the packet. In some examples, the packets may be appended with a timestamp when the packets arrive at input port 666 of networking switch 660. The packet reorder data structure 665 may allocate to timeslots based on the respective timestamp. Each packet may include a RXWD corresponding to the amount of time the packet remained in a given timeslot before being transmitted for processing.

The time interval of the timeslots may be dynamically adjusted based on whether the number of OOO packets exceeds a threshold. For example, OOO packets may be packets received by the packet reorder window with a timestamp less than the lowest timestamp in the head timeslot. If, in a given sample interval, the number of OOO packets received exceeds or falls below a threshold, the time interval of the timeslot may be dynamically adjusted. The time interval of the timeslots may be dynamically adjusted based on the respective RXWD of a packet that should have been received in order but was not. For example, if two packets were received by the packet reorder data structure 665 OOO but the threshold number of OOO packets is three, the time interval of the timeslots may be reduced. The reduction in the time interval may correspond to the RXWD last packet that was received in order but should have been received OOO.

Networking switch 660 may include one or more input ports 666. The input ports 666 may include optics hardware. The optics hardware may be configured via I2C bus. According to some examples, the processors 661 may be configured to append a timestamp to packets incoming via input ports 666.

Origination hardware 670 may include one or more processors 671, memory 672, instructions 673, data 674, and output ports 677. These components may operate in the same or similar fashion as those described above with respect to networking switch 660. The origination hardware 670 may be, in some examples, a TOR, an end user device, such as a smartphone, laptop, desktop, home assistant device, AR/VR glasses, etc., consumer hardware, or the like. The output ports 677 may be, for example, optics hardware configured via an I2C bus.

According to some examples, origination hardware 670 may include a NIC 678. The NIC 678 may be part of origination hardware 670 and/or coupled to origination hardware 670. The NIC 678 may, in some examples, be configured to append a timestamp to packets being transmitted from origination hardware 670.

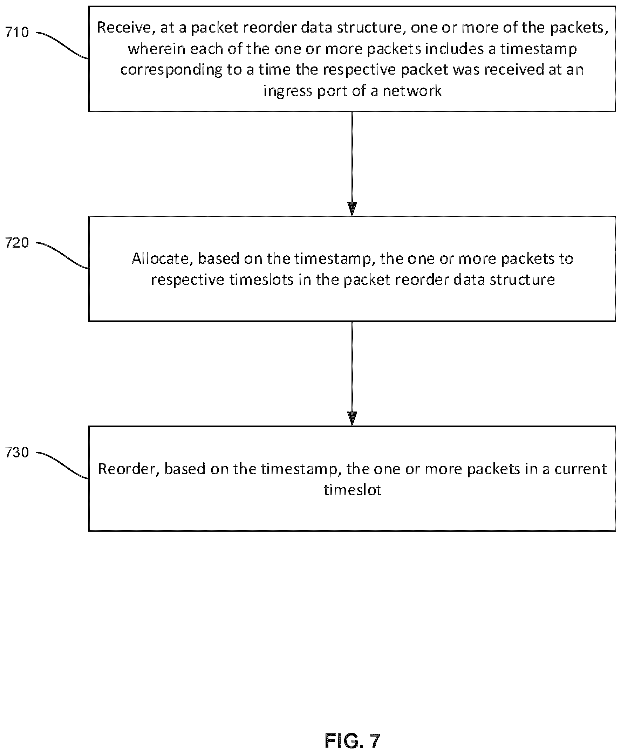

Figure 7 illustrates an example method for reorder packets to ensure network fairness. The following operations do not have to be performed in the precise order described below. Rather, various operations can be handled in a different order or simultaneously, and operations may be omitted.

In block 710, a packet reorder data structure may receive one or more packets. Each of the one or more packets may include a timestamp corresponding to a time the respective packet was received at an ingress port of a network. The ingress port may be, for example, an ingress port of a networking switch. In some examples, the ingress port may be an ingress port of a TOR. When receiving the packets, the timestamp for the respective packets may be identified. In some examples, the timestamp may correspond to a time when a client network transmitting the packet loses control of the packets to a receiving network.

In block 720, the one or more packets may be allocated to respective timeslots in the packet reorder data structure based on their timestamps. For example, the packet reorder data structure may include a plurality of timeslots. Each timeslot may be measured by a time interval. The head timeslot may be the initial timeslot in which the received packet with the lowest timestamp is allocated. The head timeslot may be used as a reference when allocating the incoming packets to the timeslots.

Allocating the one or more packets may include comparing a timestamp of a packet of the one or more packets to a time interval of the current timeslot. The current timeslot may be, for example, the head timeslot. If the timestamp of the packet falls within the time interval of the head timeslot, the packet may be allocated to the head timeslot. If the timestamp is greater than the time interval of the head timeslot, the packet may be allocated to a respective timeslot that includes a time corresponding to the timestamp of the packet. In some examples, if the timestamp is less than the time interval of the head timeslot, the packet may be immediately sent for processing as an OOO packet.

In block 730, the one or more packets in a current timeslot may be reordered based on the time stamps. For example, the packets allocated to the head timeslot may be reordered based on their respective timestamp such that the packet with the lowest timestamp is first and the highest timestamp is last. The packet with the lowest timestamp may correspond to the packet that was received first as compared to the other packets within the timeslot.

According to some examples, the duration of the timeslots may be dynamically adjusted. Dynamically adjusting the timeslots may allow for the delay in the network to be minimized by processing the packets faster. The dynamic adjustment of the duration of the timeslots may change, adjust, or alter the amount of time the system waits before processing and/or reordering the packets.

The dynamic adjustment may occur based on a trigger condition. For example, the dynamic adjustment may occur based on a fixed time interval, a volume of packet traffic, a sample interval, or a maximum network delay. In examples where the dynamic adjustment occurs based on the fixed time interval or the sample interval, the trigger condition may be the passage of the amount of time of the fixed time interval or sample interval. In examples where the dynamic adjustment occurs based on the volume of packet traffic, the trigger condition may be receiving a predetermined number of packets. In examples where the dynamic adjustment occurs based on the maximum network delay, the trigger condition may be the network delay reaching the predetermined maximum delay.

Dynamically adjusting the duration of the timeslot may include determining a number of packets received OOO. For example, the packets received by the packet reorder data structure may include a RXWD indicating the amount of time spent in a given timeslot before being processed. The packets may be ordered based on their respective RXWD from most positive to most negative. Packets with a positive RXWD may correspond to packets that were received in order whereas packets with a negative RXWD may correspond to packets that were received OOO. The number of packets with a negative RXWD may be determined to identify the number of packets received OOO.

The number of packets received OOO may be compared to a threshold number of packets. The threshold number of packets may be, in some examples, the goal, ideal, preset, etc. number of packets intended to be received OOO. In examples where the number of packets received OOO exceeds the threshold number of packets, the duration of the timeslots may be dynamically decreased. In examples where the number of packets received OOO is below the threshold number of packets, the duration of the timeslots may be dynamically increased.

The duration of the timeslots may be dynamically increased or decreased based on the RXWD of a given packet. For example, if the duration of the timeslot is to be decreased, e.g., the number of OOO packets is less than the threshold, the RXWD of the ordered packet to be included in the in order grouping of packets may correspond to the amount of time to reduce the duration of the timeslot. In such an example, if the in order grouping of packets is packets A-C and the OOO packets are packets D-F but the threshold number of OOO packets is four (4), then packet D should be included in the in order grouping of packets. The RXWD of packet D may correspond to the amount of time to decrease the duration of the timeslot.

According to some examples, the timestamp may be appended to the packets. The timestamp may be appended to the packets by encapsulating the packets or by taking the timestamp to the end of the packet such that the bytes in the packet are not rearranged. Appending the timestamp to the packets may occur at a switch in the network. In some examples, the timestamps may be appended by the client network. For example, the timestamp may be appended by the origination hardware, a NIC within and/or coupled to the origination hardware, or the like. In some examples, the timestamp may be applied by the network switch receiving the packets.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method, comprising:
receiving, by one or more processors at a packet reorder data structure, one or more packets, wherein each of the one or more packets includes a timestamp corresponding to a time a respective packet was received at an ingress port of a network;
allocating, by the one or more processors based on the timestamp, the one or more packets to respective timeslots in the packet reorder data structure; and
reordering, by the one or more processors based on the timestamp, the one or more packets in a current timeslot.

2. The method of claim 1, further comprising dynamically adjusting, by the one or more processors, a duration of the timeslots.

3. The method of claim 2, wherein the dynamic adjustment occurs based on at least one of a fixed time interval, a volume of packet traffic, a sample interval, or a maximum network delay.

4. The method of claim 2, wherein when dynamically adjusting the duration of the timeslots, the method further comprises:
determining, by the one or more processors, a number of packets received out of order;
comparing, by the one or more processors, the number of packets received out of order to a threshold number of packets; and
when the number of packets received out of order exceeds the threshold number of packets, dynamically increasing the duration of the timeslots, or
when the number of packets received out of order is below the threshold number of packets, dynamically decreasing the duration of the timeslots.

5. The method of one of claims 1 to 4, wherein when allocating the one or more packets, the method further comprises:
comparing, by the one or more processors, a timestamp of a packet of the one or more packets to a time interval of the current timeslot; and
allocating, by the one or more processors based on the comparison, the packet to a respective timeslot, wherein the respective timeslot includes a time corresponding to the timestamp of the packet.

6. The method of one of claims 1 to 5, further comprising appending, by the one or more processors, a respective timestamp to the one or more packets.

7. The method of claim 6,
wherein when appending the respective timestamps to the one or more packets, the method further comprises:
encapsulating, by the one or more processors, the respective packets, or
tacking, by the one or more processors, the respective timestamp to an end of the respective packet such that the bytes in the packet are not rearranged; or
wherein appending the respective timestamp to the one or more packets occurs at a switch in the network.

8. The method of one of claims 1 to 7,
wherein when receiving the one or more packets, the method further comprises identifying, by the one or more processors, the timestamp for the respective packet of the one or more packets; and/or
wherein the timestamp corresponds to a time a client network transmitting the one or more packets loses control of the one or more packets to a receiving network.

9. A system, comprising:
one or more processors, the one or more processors configured to:
receive, at a packet reorder data structure, one or more packets, wherein each of the one or more packets includes a timestamp corresponding to a time a respective packet was received at an ingress port of a network;
allocate, based on the timestamp, the one or more packets to respective timeslots in the packet reorder data structure; and
reorder, based on the timestamp, the one or more packets in a current timeslot.

10. The system of claim 9, wherein the one or more processors are further configured to dynamically adjust a duration of the timeslots.

11. The system of claim 10, wherein the dynamic adjustment occurs based on at least one of a fixed time interval, a volume of packet traffic, a sample interval, or a maximum network delay.

12. The system of claim 10, wherein when dynamically adjusting the duration of the timeslots, the one or more processors are further configured to:
determine a number of packets received out of order;
compare the number of packets received out of order to a threshold number of packets; and
when the number of packets received out of order exceeds the threshold number of packets, dynamically increasing the duration of the timeslots, or
when the number of packets received out of order is below the threshold number of packets, dynamically decreasing the duration of the timeslots.

13. The system of one of claims 9 to 12, wherein when allocating the one or more packets, the one or more processors are further configured to:
compare a timestamp of a packet of the one or more packets to a time interval of the current timeslot; and
allocate, based on the comparison, the packet to a respective timeslot, wherein the respective timeslot includes a time corresponding to the timestamp of the packet.

14. The system of one of claims 9 to 13,
wherein the one or more processors are further configured to append a respective timestamp to the one or more packets,
wherein appending the respective timestamps to the one or more packets comprises:
encapsulating the respective packets, or
tacking the respective timestamp to an end of the respective packet such that the bytes in the packet are not rearranged; and
wherein, optionally, appending the respective timestamp to the one or more packets occurs at a switch in the network.

15. The system of one of claims 9 to 14,
wherein when receiving the one or more packets, the one or more processors are further configured to identify the timestamp for the respective packet of the one or more packets; or
wherein the timestamp corresponds to a time a client network transmitting the one or more packets loses control of the one or more packets to a receiving network.

16. One or more non-transitory computer-readable medium storing instructions, which when executed by one or more processors, cause the one or more processors to:
receive, at a packet reorder data structure, one or more packets, wherein each of the one or more packets includes a timestamp corresponding to a time a respective packet was received at an ingress port of a network;
allocate, based on the timestamp, the one or more packets to respective timeslots in the packet reorder data structure; and
reorder, based on the timestamp, the one or more packets in a current timeslot.
